# EUROPEAN PATENT SPECIFICATION

(11) **EP 4 399 189 B1**
(45) Date of publication and mention of the grant of the patent: **17.06.2026**
(21) Application number: 22773313.6
(22) Date of filing: 05.09.2022
(51) Int. Cl.: C04B 18/06

(54) **INTEGRATED GRANULATION SYSTEM FOR THE TREATMENT OF POWDERED INDUSTRIAL WASTE**
INTEGRIERTES GRUNULIERSYSTEM ZUR BEHANDLUNG VON INDUSTRIEABFÄLLTEN IN PULVERFORM
SYSTEME DE GRANULATION INTÉGRÉ POUR LE TRAITEMENT DE DÉCHETS INDUSTRIELS EN POUDRE

(30) Priority: 07.09.2021 IT 202100023102
(43) Date of publication of application: 17.07.2024
(73) Proprietor: Systema Ambiente S.p.A., 25129 Brescia (BS) (IT)
(72) Inventor: TRANI, Francesco, 25129 Brescia (BS) (IT)
(74) Representative: Fiammenghi, Eva
(86) International application number: PCT/IB2022/058322
(87) International publication number: WO 2023/037224

(56) References cited:
- US-A1- 2003 227 814

## Description

### Technical field

The present invention relates to the field of systems for the treatment of industrial waste. In greater detail, the present invention relates to a peculiar integrated system suitable for the treatment of powdered industrial waste, and in particular fly ash coming from garbage power plants, so as to reduce the environmental impact thereof in terms of emissions (emissions of vapours, dust, ammonia, odours) and, simultaneously, to facilitate the management thereof in terms of storage, transfer and disposal. All this thanks to a granulation/pelletisation system peculiarly integrated in the plant engineering system in question.

### Prior art

Granulation is a technological process in which the particles of a powder (intended as granular material) are made to adhere to each other by forming particles with larger diameter defined as *granules.*

The process is often used in the pharmaceutical industry for the preparation of granules which are then destined to direct use or to subsequent processes for the preparation of other pharmaceutical forms such as for example capsules or tablets. A granule with respect to the powder from which it is derived has several characteristics which make it optimal for certain types of processing. The larger particle size enhances the flow and compatibility properties thereof while the aggregation of a powder in granules prevents the typical phenomena of dispersion of fine powders. Furthermore, a granule is less sensitive to environmental moisture changes with respect to a powder, therefore simplifying the transportation and preservation of the material.

By definition, a granule is always obtained starting from an initial homogeneous powder. Through specific techniques and processes carried out using suitable machines, the powder is processed so as to obtain a granule as homogeneous as possible and with desired characteristics. The main wet granulation processes are *wetting,* actual *granulation* and final *drying* of the granules. If required, the dried granules may be subjected to sieve analysis so as to obtain a material consisting of particles belonging to the same particle size class.

The powder sample is subjected to mixing with progressive addition of a solution based on water and/or ethanol which may contain a *granulating substance* or *binder* (generally polymers such as PVP, PEG, cellulose derivatives or waxy substances of various kind) capable of forming interparticle bonds for the formation of what is referred to as *dough.* The amount of binding solution added to the dough should be just sufficient to make the powder particles to adhere to each other being interposed between them forming ultra-thin stationary adhesive liquid layers (*film*s). Proportionally to the degree of moisture of the dough there can be identified four stages for the distribution of the solvent between the particles: In increasing order of addition of solvent: 1) pendular state, 2) funicular state, 3) capillary state, 4) drop state. The degree of moisture that characterises each state depends on the nature of the powder and the binding solution, and therefore difficult to predict given that the there is a significant number of variables to be considered. The optimal state at which wetting is to be considered completed is the *capillary state;* a lower wetting would not produce sufficiently adhered granules while an excessive wetting would actually interfere with the adhesion of the particles, leading to granules not adhered correctly even in this case The optimal degree of moisture can be determined in terms of the torsional strength required by a possible machine to mix the dough: upon reaching state 3), the mixer will "struggle more" when mixing the dough, and - as a result - it will increase the torsional strength, while in state 4) - which is more diluted - the mixer will "struggle less" and therefore the torsional strength will decrease once again. The granulation process (*damp screening*) is directly carried out on the moist dough and it envisages the use of equipment called granulators. Using a mechanical process, the material is reduced into granules as homogeneous as possible.

In the final step, the granules are dried. The evaporation of the residual moisture from the granules is required to stabilise the material slowing the degradation of the components thereof and the possible formation of moulds and bacteria. Commonly, the solvent is moved away by applying heat in air circulation chambers, under vacuum or in a fluid bed. The *solute migration* phenomenon may occur during this process; this occurs in cases where some substances present in the granule are partially solubilised by the granulation solvent. Given that vaporisation is a surface phenomenon, during the drying the liquid inside the single granules will be progressively "pushed" outwards by capillarity dragging - along with them - the particles passed through the solution which will deposit in more superficial layers of the granule, altering the internal composition thereof and therefore making it inhomogeneous. In order to overcome this interfering phenomenon, there can be used general solutions such as the use of the minimum amount required of fluid when preparing the dough, use of high viscosity solvents, speeding up the drying process, preparing small particle size granules and use of microwave under vacuum drying in that it is the most effective method at reducing migration.

Another type of granulation technique is dry granulation. Dry granulation is also referred to as "precompression" or "compaction", given that after mixing the product, it is compressed into compact products using compacting machines. The industrial process envisages pushing the powdered mixture, coming from a supply funnel, by a screw (worm screw) system, which is also used to deaerate it. From the screw, the powder is made to pass through two cylinders which rotate in the reverse direction and which compress it, transforming it into a thin sheet. The sheets obtained are finely sieved and ground. Furthermore, in order to make the caking process more efficient, there can be added excipients, such as for example lactose, sucrose or polymers, which act as dry binders.

The bonds between the particles are formed by means of: *solid bridges* (due to the effect of the friction forces between them during the compression, responsible for the softening and partial fusion of the resulting mixture); and van der Waals attraction forces (formed by approaching the surfaces of the particles due to compaction).

Generally, agglomeration can be defined as a "particle size increasing process in which the small and fine particles, such as powders, are combined in larger masses, heaps, tablets or briquettes to be used as finished products or in a subsequent stage of the process".

This definition is useful to understand which of the elements are to be evaluated when choosing the appropriate agglomeration technique. For example, it is important to understand that the shape and size of the particles can affect the transportation and final destination of the agglomerate so that it is easy to handle following the caking process.

The preliminary study of the ash agglomeration techniques showed four different methods available and applicable. As mentioned above, there are several techniques known in literature and adopted for agglomerating combustion ashes. They are mainly distinguished by type of granulator used: plate granulators, drum granulator, pelletizers, roller extruders.

Machines of the first type, that is plate granulators, are of particular interest for the understanding of the invention described below. In this granulation process, the dimensional growth is obtained through the collision of moist particles which are subjected to an undulatory/rotary motion. The inclined plate granulator is a system which consists of a shallow cylindrical plate with respect to the diameter of the machine, which rotates around the cylindrical axis thereof, the latter inclined with respect to the horizontal plane. The grouping effect which is produced in the plate determines a rather limited particle size distribution for the produced granules; this allows to avoid a subsequent screening. The plate granulation principles can be summarised as follows: the starting material in fine particles is continuously supplied in the vat (plate), kept moist through a multiple nozzle spray humidifier which supplies water in atomised form and possibly even continuously added with a suitable hydraulic binder. The addition, constantly over time, of a proportionate amount of appropriate hydraulic binder, is essentially as a function of the content of binding compounds already normally present in the powders to be treated (mainly calcium-based binding compounds). In multiple cases the powders subject of the present application alone contain binding compounds in amounts such that they do not require the addition of further external hydraulic binders. Following the undulatory/rotary motion of the vat (plate), the moistened material starts to form small seed-shaped particles; therefore, the particles, due to the rolling action on the bottom surface, on the lateral surface of the plate - besides due to the contact and relative mutual rolling - enlarge into progressively larger grains, until they are discharged into the vat (plate). It should be observed that the particle size (and therefore the specific weight in the heap) determines the trajectory thereof and the motion within the machine, so that, while the powders just supplied lie in the lower and inner part of the plate, as the trajectory of the particle increases progressively in size which acquires a wider radius, the rolling speed increase; in addition, the particle progressively moves towards the surface of the plate, until it exits from the lower edge.

Analysing the patents in the field of the present application, US 2003/227814 A1 discloses a process for producing both colored and noncolored lightweight aggregates. The processes involve mixing a lightweight fine material such as ash with cement, and optionally pigment, then agglomerating the mixture, curing, and sizing the lightweight aggregate. Calcium stearate is added to the lightweight aggregate for reducing the moisture permeability of the lightweight aggregate end product. The colored and noncolored lightweight aggregate may be used in a variety of ways such as to provide a lightweight concrete mix with the same exterior and interior color, and for other asphalt pavement, geotechnical, horticulture, and specialty uses. US 2003/227814 does not disclose how to fine tune the dosing of fly ashes into the pelletizer, which is one of the technical problem solved by the present invention.

In the field of application to which the present invention relates, there is particularly felt the interest to increasingly optimise the granulation process of particular types of substrates and specifically powdered waste, which are difficult to handle specifically due to the powdered consistency thereof, especially given that they are volatile and, as such, lead to undesired aspects often following the diffusion thereof in the surrounding environment (uncontrolled emission of powders, vapours, odours, ammonia).

In particular, there is particularly felt the interest to optimise industrial waste recovery and disposal processes and in particular of fly ash coming from garbage power plants.

In this regard, an object of the present invention is to optimise a pre-existing process for the treatment of industrial waste in form of flying ash so as to minimise odorous impact mainly due to the presence of ammonia therein and the powdered consistency typical of ashes.

In greater detail, the present invention, described in detail hereinafter, consists of an optimised system in which a pre-existing system for the treatment of powdered waste is peculiarly supplemented with a system for the agglomeration/compaction of the ashes leading to obtaining a finished product, that is granular ashes, which is easier to manage in terms of storage and transportation, also contributing to the efficiency of the entire process for treating this type of waste.

### Description of the invention

The present description relates to a peculiar plant engineering system, as well as to a process implemented with said system, for the treatment of industrial waste and, specifically, for the treatment of fly ash, like the one coming, by way of non-limiting example, from garbage power plants.

In even greater detail, the present invention relates to a peculiar system which, advantageously, transforms light ash into a granular inertized material and that is easier to manage industrially during storage and transportation.

Advantageously, by generating granular powders, said system consistently minimises the powderiness thereof and - as a result - the odour impact due to the presence of ammonia typically associated with the industrial waste that is treated with said system.

In greater detail, said plant engineering system is configured as an integrated implementation of a pre-existing system suitable for the treatment of industrial waste and specifically fly ash. In order to obtain a greater and more complete descriptive comprehensiveness of the system in question, the Applicant points out that the pre-existing waste treatment system envisages: the treated powders be first and foremost stored in two separate tanks. From each of the two tanks, through the extractor screw and subsequent conveyor screw, the powders are introduced into a cylindrical mixer, into which binders and liquid waste are further introduced as fluidifying agents. Upon exit from the mixer, the processed material reaches - by gravity - a vat, in which it is left to stand for the time required for maturation thereof.

The integrated plant engineering system according to the present invention associates - with said pre-existing waste treatment system - specific components which - given their structure and automation - can cooperate with the components of the pre-existing system or they can operate independently with respect to said pre-existing system.

In greater detail, the integrated plant engineering system in question for the treatment of industrial waste and, specifically for the treatment of fly ash, envisages that one of said two tanks be dedicated to the storage of the so-called "fly ash" which is destined to a pelletisation process by an appropriate and known pelletizer which, according to the present invention, is peculiarly associated with the pre-existing system for the treatment of industrial waste for effective agglomeration thereof.

The integrated system according to the present invention is substantially characterised in that: from said tank, using an extractor screw and a conveyor screw, the material reaches above the head of a mixer in which at least a bifurcation is arranged with at least a horizontal screw which is suitably managed to choose to send the flying ash to the mixer (pre-existing), or to the new pelletizer. The integrated system in question is also designed to have the same management options on the pre-existing system and a new system also as regards management of the possible binder to be added. As a matter of fact, also the possible binder, contained in the dedicated silos, if necessary, is collected through an extractor screw and conveyed, through a subsequent conveyor screw, to a bifurcation, managed through solenoid valves by sleeve pneumatic valves from which it can be sent to the pre-existing mixer, or to the pelletisation system.

### Description of the figures

The integrated plant engineering system for the treatment of industrial waste according to the present invention, will be described in detail hereinafter even with reference to the attached drawings wherein:

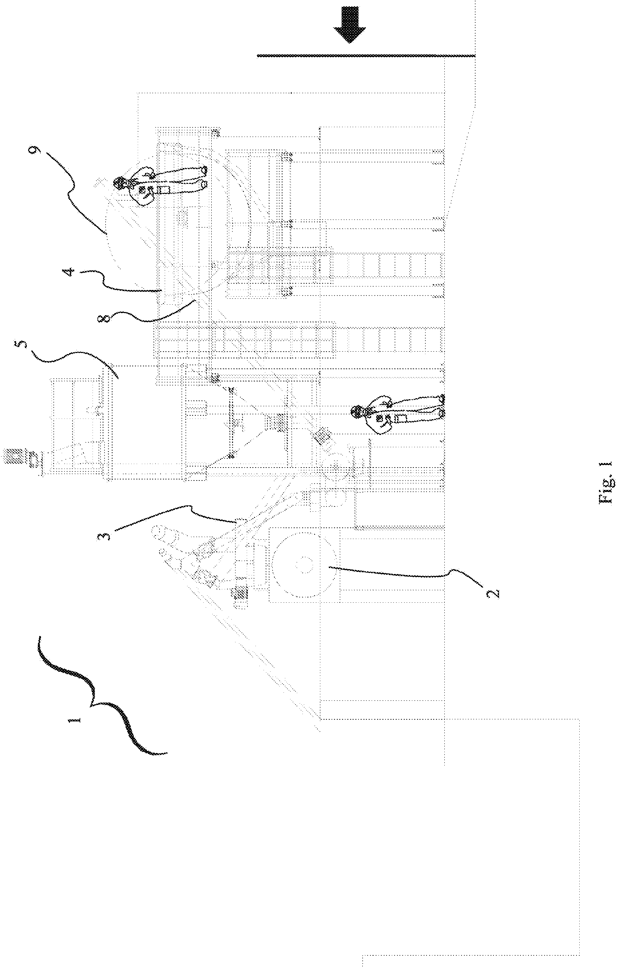

FIGURE 1 shows a schematic view of the integrated system (1) according to the present invention. Particularly shown are: the mixer 2, the bifurcation 3 - for the powders being supplied, the bifurcation is preferably, but not exclusively, represented by a horizontal screw, for the binder is preferably, but not exclusively, represented by a pair of sleeve pneumatic valves), the pelletizer 4 and the plate 9 thereof.

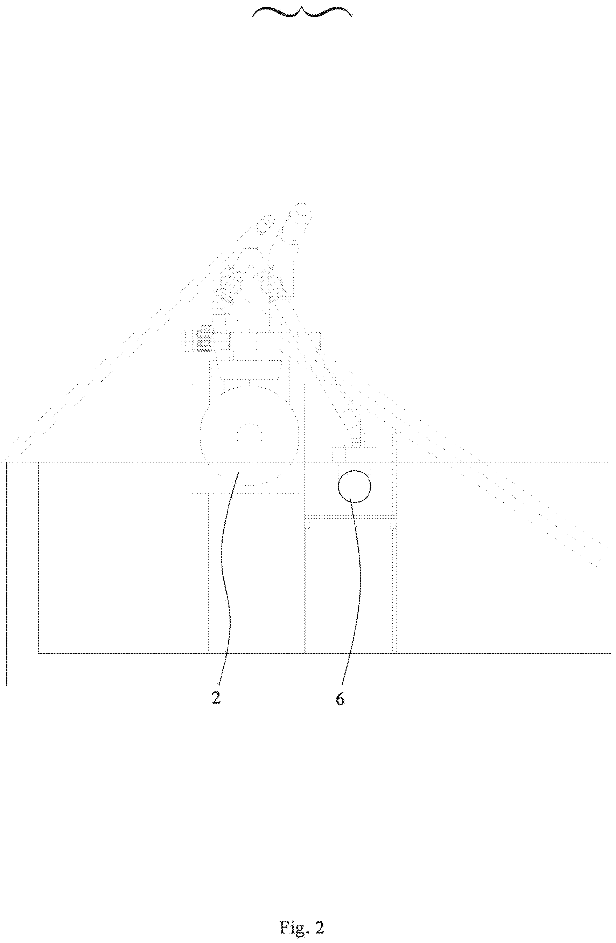

FIGURE 2 shows a further schematic view of the integrated system 1 according to the present invention which shows the mixer 2 and the horizontal screw 6 (cross-sectional view) for transferring the powders to the hopper-lung 5 (not shown in the figure in question).

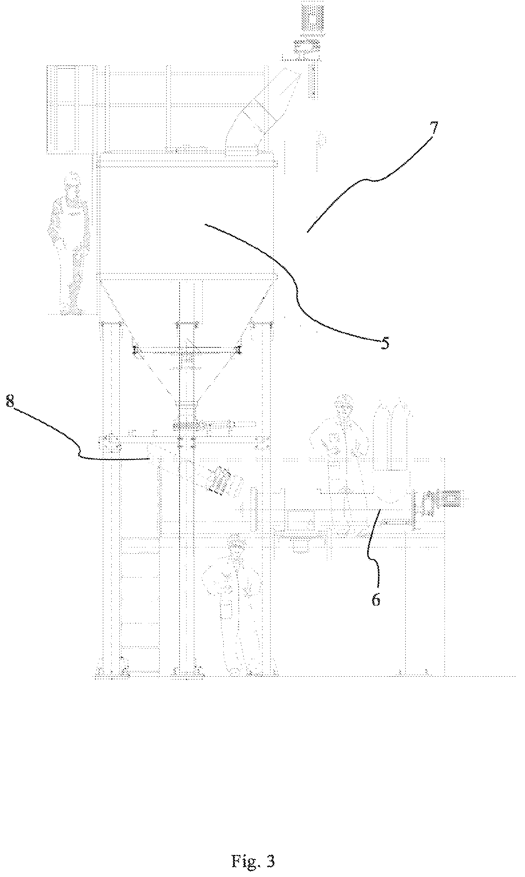

FIGURE 3 shows a further schematic view of the integrated system 1 according to the present invention which shows the hopper-lung 5 and the system for supplying the treatment material to the hopper-lung, starting from the bifurcation upstream 3, system comprising the horizontal screw 6 and following vertical screw 7.

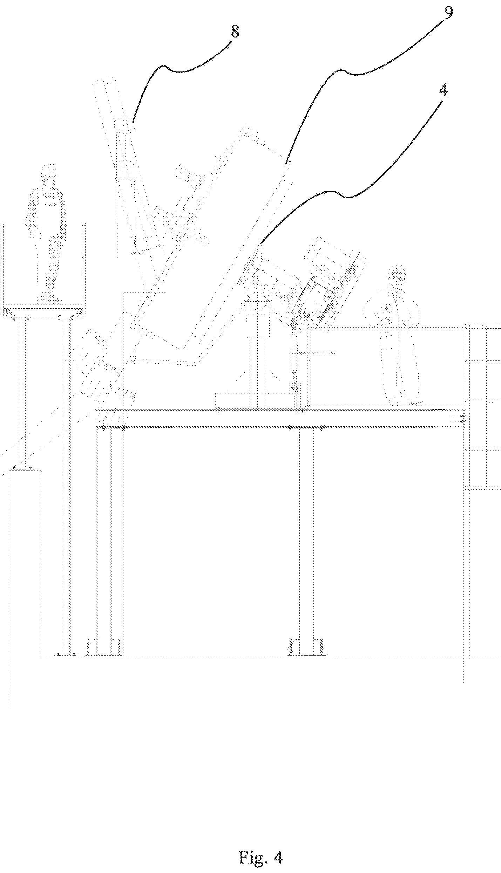

FIGURE 4 shows a schematic view of the integrated system 1 according to the present invention, which shows the pelletizer 4, the plate 9 thereof and the adjustable metering screw 8.

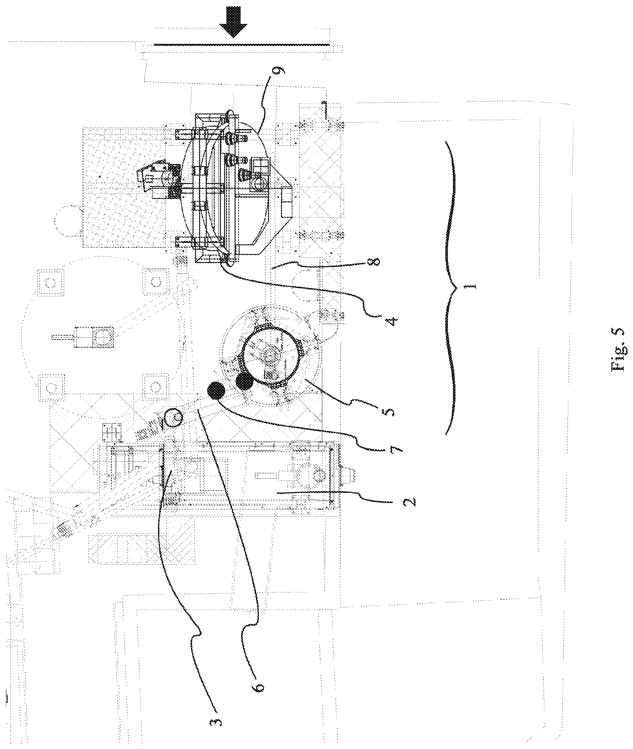

FIGURE 5 shows a top schematic view of the integrated system (1) according to the present invention; basically it is a general layout.

### Detailed description of the invention

The integrated system 1 for the treatment of industrial waste, and typically for the treatment of fly ash, comprises at least two tanks adapted to contain waste to be treated and transformed into granular form. In greater detail, said system 1 comprises at least a first tank and at least a second tank of which at least one of said tanks is adapted to contain industrial waste in form of fly ash. Said integrated system 1 further comprises at least an extractor screw and at least a conveyor screw and at least a mixer 2 connected to said conveyor screw. Said system is characterised in that it comprises - between said conveyor screw and said mixer 2 - at least a bifurcation 3, consisting of a horizontal screw which, suitably managed by inverting the rotation direction thereof, allows to direct the fly ash to at least said mixer 2, comprised in said system 1 or to at least a pelletizer 4. Said integrated system 1 is in particular characterised in that it comprises said pelletizer 4, peculiarly integrated in said system 1.

In the integrated system 1 according to the present invention, starting from said bifurcation 3 mentioned above, the fly ash is sent to a hopper-lung 5 measuring at least 4 and preferably at least 5 cubic meters with storage capacity by using a horizontal screw 6 and a vertical loading screw 7. From said hopper-lung 5, controlled by level sensors and preferably provided with a hydraulic guillotine valve for controlling the discharge on the bottom and with suitable vibrating and compressed air systems for preventing the possible compaction of the material and guarantee the portability thereof , the material is sent to the pelletizer 4 by using an extractor screw from the hopper and supply metering device to the plate provided with motor drive with inverter, inverter used for strictly controlling the supply flow rate to the granulator plate.

Said pelletizer 4 is typically a rotary drum mixing system comprising a plate 9 having an approximately 3 meter diameter; and at least one coupling to a powder suctioning system located on the upper part of the casing. In said plate, besides loading the fly ash to be treated, mains process water in atomised form is also introduced through various nozzle spraying units, provided with filters and solenoid valves. These solenoid valves are managed according to the moisture thresholds detected in the plate 9 by moisture sensors, provided with cleaning systems (metering adjustment through treatment water nozzles is therefore semi-automatic according to the working moisture thresholds which can be set through a touch panel of an appropriate dedicated control unit). The points for introducing the atomised water into the pelletizer plate, through the manual adjustment of the spraying axis of the single nozzles can also be adjusted. After being processed, the material exits from at least one front opening and reaches - by gravity - into the existing vat in front. The process is adjusted by adjusting: rotation speed of the plate (whose main motor is provided with and adjusted by an inverter); flow rate for supplying to the plate (use of inverter on the metering screw motor); change of moisture thresholds (plc with touch panel on a dedicated electric panel), inclination of the plate (mechanical manual adjustment); points for introducing atomised water into the pelletizer plate. Also the possible binder, contained in the dedicated silos, if deemed necessary, is collected through an extractor screw and conveyed, through a subsequent conveyor screw, to a bifurcation, managed through solenoid valves by sleeve pneumatic valves from which it can be sent either to the pre-existing mixer, or to the pelletisation system.

The integrated system 1 according to the present invention therefore envisages the implementation of a process for the treatment of industrial waste, and typically of fly ash, which substantially consists of the following steps:
a) Waste storage in at least two tanks, of which at least one is suitable for containing waste in form of fly ash;
b) Transferring, by using at least an extractor screw and at least a screw for conveying said waste to a bifurcation 3 comprising a horizontal screw which can rotate in both rotation directions from which the waste is sent to a mixer 2 or to a hopper-lung 5, using a horizontal screw 6 and a vertical loading screw 7.
c) Transferring said waste from said hopper-lung 5 to a pelletizer 4, preferably with a rotary drum, comprising a plate 8 having an approximately 3 meter diameter; and at least one coupling to a powder suctioning system located on the upper part of the casing;
d) Introduction of mains process water into said plate 9 through a plurality of spraying units provided with nozzles, filters and solenoid valves managed according to the moisture thresholds set from a dedicated touch panel and moisture values detected inside the plate 9 by moisture sensors provided with cleaning systems;
e) Exit of the waste thus processed from at least a front opening and reaching of the latter - by gravity - into a vat for recovering waste thus processed.

As mentioned above, the entire process is carried out by adjusting parameters at least such as: rotation speed of the plate through the inverter; flow rate for supplying to the plate by means of inverter); change of moisture thresholds by means of plc with touch panel on a dedicated electric panel); inclination of the plate by means of mechanical manual adjustment; points for introducing atomised water into the pelletizer plate.

It should also be observed that upon exit from the pelletizer, the waste treated and obtained in granular form may possibly require a certain variable maturation time, for example between 1 h and one week, before it can be subjected to control and possibly be moved within the plant and therefore be loaded for final shipping.

Lastly, it should be observed that with granulation, the stabilisation phenomenon and the action of the binder, usually naturally present in the solid matrix used, have a prevailing effect on the surface of the granule, however guaranteeing the compactness thereof and the physical and mechanical stability and resistance characteristics required for underground storage thereof, as well as the reduction of powderiness and minimisation of ammonia release phenomena (and relative odours) which are typical of a moist environment.

The low content of liquid matrix and minimum exposure surface, will allow to consistently reduce the emission phenomena, mainly ammonia, as well as other possible odour emissions which could be typical of such waste after release.

## Claims

1. Integrated system (1) for the treatment of industrial waste, said system comprising at least a first tank and at least a second tank of which at least one of said tanks is suitable for containing industrial waste in the form of fly ash, said integrated system (1) also comprising at least one extractor screw and at least one conveyor screw and at least one mixer (2) connected to said conveyor screw, said integrated system (1) being **characterized in that** it comprises a pelletizer (4) and, between said conveyor screw and said mixer (2), at least a bifurcation (3), consisting of a horizontal screw which can rotate in both directions and which allows to direct the fly ash to the mixer (2) of to the pelletizer (4); said integrated system (1) also comprising a hopper-lung (5), said integrated system (1) further comprising at least a further extractor screw for feeding/dosing to the plate of said pelletizer (4) for sending the material to be treated to said pelletizer (4), said extractor screw for feeding to the plate being provided with a motor drive with inverter for the continuous adjustment of the dosage of the powders (and any added binder) to the pelletizer.

2. Integrated system (1) according to the preceding claim wherein, starting from said bifurcation (3), the fly ash is sent to the hopper-lung (5) by using a horizontal screw (6) and a vertical loading screw (7), said screws being included in said system (1), said hopper-lung (5) being provided with a hydraulic guillotine valve for controlling the discharge.

3. Integrated system (1) according to the preceding claim, wherein the hopper-lung (5) has at least 4 cubic metres of capacity and it is provided with: hydraulic guillotine valve for controlling the discharge, sensors for detecting the level of the contained material and suitable vibrating and compressed air systems to prevent possible compaction of the material and ensure the portability thereof.

4. Integrated system (1) according to the preceding claim, wherein the hopper-lung (5) has 5 cubic meters of capacity.

5. Integrated system (1) according to any one of the preceding claims, wherein the pelletizer (4) is a rotary drum mixing system comprising a plate (9) having a diameter of at least 2 meters; and at least a connection to the powder suctioning system located in the upper part of the casing, said plate (9) being adapted, in addition to loading the fly ash to be treated, to receive the mains water through different nozzle spraying units provided with filters and solenoid valves, said solenoid valves being managed according to moisture thresholds, the moisture value detected inside said plate (9) by moisture sensors, comprised in said system (1) and provided with cleaning systems, said system (1) also providing for that said pelletizer (4) has a front opening from which the material, after being processed, exits and reaches by gravity inside a vat in front.

6. Integrated system (1) according to any one of the preceding claims, wherein the pelletizer (4) is a rotary drum mixing system comprising a plate (9) having a diameter of at least 3 meters.

7. Process for the treatment of fly ash, comprises the following steps:
a) Waste storage in at least two tanks, of which at least one is suitable for containing waste in form of fly ash,
b) Transferring, by means of at least one extractor screw and at least one conveyor screw of said waste to a bifurcation (3) from which the waste is sent to a mixer (2) or to a hopper-lung (5);
c) Transferring said waste from said hopper-lung (5) to a pelletizer (4), preferably with a rotary drum, comprising a plate (9) having a diameter of approximately (3) meters; and at least a connection to the powder suctioning system located in the upper part of the casing; said transfer providing that: starting from said bifurcation (3), the fly ash is sent to the hopper-lung (5) of at least 4 cubic meters of storage capacity by using a horizontal screw (6) and a vertical loading screw (7) and that from said hopper-lung (5), preferably provided with a hydraulic guillotine valve for controlling the discharge, the material is sent to the pelletizer (4) by using an extractor screw feeding to the plate provided with motor drive with inverter for flow rate regulation;
d) Introduction of mains water into said plate (9) by means of a plurality of nozzle spraying units provided with filters and solenoid valves managed according to moisture thresholds set from a dedicated touch panel; moisture value detected inside the plate (9) itself by moisture sensors provided with cleaning systems;
e) Exit of the waste thus processed from at least a front opening and reaching of the latter - by gravity - into a vat for recovering processed waste.

8. Process for the treatment of fly ash according to the preceding claim, wherein said steps a), b), c), d), e) are followed by a step of maturation of the granules of variable times before said granules are destined to an end use.

## Patentansprüche

1. Integriertes System (1) zur Behandlung von Industrieabfall, wobei das System zumindest einen ersten Behälter und zumindest einen zweiten Behälter aufweist, von denen zumindest einer der Behälter zum Aufnehmen von Industrieabfall in der Form von Flugasche geeignet ist, wobei das integrierte System (1) ferner zumindest eine Extraktorschnecke und zumindest eine Förderschnecke sowie zumindest einen mit der Förderschnecke verbundenen Mischer (2) aufweist, wobei das integrierte System (1) **dadurch gekennzeichnet ist, dass** es einen Pelletierer (4) und zwischen der Förderschnecke und dem Mischer (2) zumindest eine Verzweigung (3) aufweist, bestehend aus einer horizontalen Schnecke, die sich in beide Richtungen drehen kann und die es ermöglicht, die Flugasche zu dem Mischer (2) oder zu dem Pelletierer (4) zu leiten; wobei das integrierte System (1) zudem eine Trichter-Lunge (5) aufweist, wobei das integrierte System (1) ferner zumindest eine weitere Extraktorschnecke zum Zuführen/Dosieren zur Platte des Pelletierers (4) aufweist, um das zu behandelnde Material an den Pelletierer (4) zu leiten, wobei die Extraktorschnecke zum Zuführen zur Platte mit einem Motorantrieb mit Inverter zum kontinuierlichen Einstellen der Dosierung der Pulver (und eines etwaigen zugesetzten Bindemittels) zum Pelletierer versehen ist.

2. Integriertes System (1) gemäß dem vorstehenden Anspruch, wobei die Flugasche ausgehend von der Verzweigung (3) unter Verwendung einer horizontalen Schnecke (6) und einer vertikalen Beschickungsschnecke (7) zu der Trichter-Lunge (5) geschickt wird, wobei die Schnecken in dem genannten System (1) enthalten sind und die Trichter-Lunge (5) mit einem hydraulischen Absperrschieber zum Steuern der Abgabe versehen ist.

3. Integriertes System (1) gemäß dem vorstehenden Anspruch, wobei die Trichter-Lunge (5) ein Fassungsvermögen von zumindest 4 Kubikmetern aufweist und mit Folgendem versehen ist:
einem hydraulischen Absperrschieber zum Steuern der Abgabe, Sensoren zum Feststellen des Füllstands des enthaltenen Materials sowie geeigneten Systemen für Schwingungen und
Druckluft, um eine mögliche Verdichtung des Materials zu verhindern und dessen Beweglichkeit sicherzustellen.

4. Integriertes System (1) gemäß dem vorstehenden Anspruch, wobei die Trichter-Lunge (5) ein Fassungsvermögen von 5 Kubikmetern aufweist.

5. Integriertes System (1) gemäß einem der vorstehenden Ansprüche, wobei der Pelletierer (4) ein Rotationstrommel-Mischsystem ist, das eine Platte (9) mit einem Durchmesser von zumindest 2 Metern aufweist; sowie zumindest ein Bindeglied zu dem Pulverabsaugsystem, das sich im oberen Teil des Gehäuses befindet, wobei die Platte (9) dazu ausgelegt ist, zusätzlich zum Beschicken mit der zu behandelnden Flugasche Leitungswasser über verschiedene, mit Filtern und Magnetventilen versehene Düsensprüheinheiten zu erhalten, wobei die Magnetventile entsprechend Feuchtigkeitsschwellenwerten gehandhabt werden, wobei der Feuchtigkeitswert innerhalb der Platte (9) durch Feuchtigkeitssensoren, die in dem System (1) enthalten und mit Reinigungssystemen versehen sind, detektiert wird, wobei das System (1) ferner vorsieht, dass der Pelletierer (4) eine vordere Öffnung aufweist, aus der das Material, nachdem es verarbeitet wurde, austritt und durch Schwerkraft in einen davor befindlichen Behälter gelangt.

6. Integriertes System (1) gemäß einem der vorstehenden Ansprüche, wobei der Pelletierer (4) ein Rotationstrommel-Mischsystem ist, das eine Platte (9) mit einem Durchmesser von zumindest 3 Metern aufweist.

7. Verfahren zur Behandlung von Flugasche, das die folgenden Schritte aufweist:
a) Lagerung von Abfall in zumindest zwei Behältern, von denen zumindest einer zum Aufnehmen von Abfall in Form von Flugasche geeignet ist;
b) Befördern des Abfalls mittels zumindest einer Extraktorschnecke und zumindest einer Förderschnecke zu einer Verzweigung (3), von der aus der Abfall zu einem Mischer (2) oder zu einer Trichter-Lunge (5) geschickt wird;
c) Befördern des Abfalls von der Trichter-Lunge (5) zu einem Pelletierer (4), vorzugsweise mit einer Rotationstrommel, der eine Platte (9) mit einem Durchmesser von näherungsweise 3 Metern aufweist; sowie zumindest ein Bindeglied zu dem Pulverabsaugsystem, das sich im oberen Teil des Gehäuses befindet; wobei diese Beförderung dafür sorgt, dass: die Flugasche ausgehend von der Verzweigung (3) unter Verwendung einer horizontalen Schnecke (6) und einer vertikalen Beschickungsschnecke (7) an die Trichter-Lunge (5) mit einer Speicherkapazität von zumindest 4 Kubikmetern geschickt wird und dass das Material von der Trichter-Lunge (5), die vorzugsweise mit einem hydraulischen Absperrschieber zum Steuern der Abgabe versehen ist, unter Verwendung einer Extraktorschnecke, die die mit einem Motorantrieb mit Inverter zur Durchflussratenregelung versehene Platte beschickt, an den Pelletierer (4) geschickt wird;
d) Einleitung von Leitungswasser in die Platte (9) mittels mehrerer Düsensprüheinheiten, die mit Filtern und Magnetventilen, die entsprechend Feuchtigkeitsschwellenwerten, welche über ein zugehöriges Touchpanel eingestellt werden, gehandhabt werden, versehen sind; ein Feuchtigkeitswert innerhalb der Platte (9) selbst wird durch Feuchtigkeitssensoren, die mit Reinigungssystemen ausgestattet sind, detektiert;
e) Austritt des so aufbereiteten Abfalls aus zumindest einer vorderen Öffnung und Erreichen der letzteren - durch Schwerkraft - in einen Behälter zum Rückgewinnen des aufbereiteten Abfalls.

8. Verfahren zur Behandlung von Flugasche gemäß dem vorstehenden Anspruch, wobei auf die Schritte a), b), c), d) und e) ein Schritt der Reifung der Körner von variabler Dauer folgt, bevor die Körner einer Endverwendung zugeführt werden.

## Revendications

1. Système intégré (1) de traitement des déchets industriels, ledit système comprenant au moins une première cuve et au moins une deuxième cuve parmi lesquelles au moins l'une desdites cuves est appropriée pour contenir des déchets industriels sous forme de cendres volantes, ledit système intégré (1) comprenant également au moins une vis d'extraction et au moins une vis transporteuse et au moins un mélangeur (2) relié à ladite vis transporteuse, ledit système intégré (1) étant **caractérisé en ce qu'**il comprend un granulateur (4) et, entre ladite vis transporteuse et ledit mélangeur (2), au moins une bifurcation (3), constituée d'une vis horizontale qui peut tourner dans les deux sens et qui permet de diriger les cendres volantes vers le mélangeur (2) ou vers le granulateur (4) ; ledit système intégré (1) comprenant également une trémie tampon (5), ledit système intégré (1) comprenant en outre au moins une autre vis d'extraction pour l'alimentation/le dosage vers la plaque dudit granulateur (4) afin d'envoyer le matériau à traiter vers ledit granulateur (4), ladite vis d'extraction pour l'alimentation vers la plaque étant pourvue d'un entraînement motorisé à vitesse variable pour l'ajustement continu du dosage des poudres (et de tout liant ajouté) vers le granulateur.

2. Système intégré (1) selon la revendication précédente, dans lequel, à partir de ladite bifurcation (3), les cendres volantes sont envoyées vers la trémie tampon (5) au moyen d'une vis horizontale (6) et d'une vis de chargement verticale (7), lesdites vis étant incluses dans ledit système (1), ladite trémie tampon (5) étant pourvue d'une vanne guillotine hydraulique pour réguler l'évacuation.

3. Système intégré (1) selon la revendication précédente, dans lequel la trémie tampon (5) présente une capacité d'au moins 4 mètres cubes et elle est pourvue : d'une vanne guillotine hydraulique pour réguler l'évacuation, de capteurs pour détecter le niveau du matériau contenu et de systèmes à air comprimé et vibrants appropriés pour empêcher un éventuel compactage du matériau et assurer sa portabilité.

4. Système intégré (1) selon la revendication précédente, dans lequel la trémie tampon (5) présente une capacité de 5 mètres cubes.

5. Système intégré (1) selon l'une des revendications précédentes, dans lequel le granulateur (4) est un système de mélange à tambour rotatif comprenant une plaque (9) ayant un diamètre d'au moins 2 mètres ; et au moins un raccordement au système d'aspiration de poudre situé dans la partie supérieure du carter, ladite plaque (9) étant adaptée, en plus du chargement des cendres volantes à traiter, pour recevoir l'eau du réseau par l'intermédiaire de différentes unités de pulvérisation à buses munies de filtres et d'électrovannes, lesdites électrovannes étant gérées en fonction des seuils d'humidité, la valeur d'humidité étant détectée à l'intérieur de ladite plaque (9) par des capteurs d'humidité, compris dans ledit système (1) et pourvus de systèmes de nettoyage, ledit système (1) prévoyant également que ledit granulateur (4) présente une ouverture frontale par laquelle le matériau, après traitement, sort et atteint par gravité l'intérieur d'un bac disposé en avant.

6. Système intégré (1) selon l'une des revendications précédentes, dans lequel le granulateur (4) est un système de mélange à tambour rotatif comprenant une plaque (9) ayant un diamètre d'au moins 3 mètres.

7. Procédé de traitement de cendres volantes, comprenant les étapes suivantes :
a) le stockage de déchets dans au moins deux cuves, dont au moins une est appropriée pour contenir des déchets sous forme de cendres volantes ;
b) le transfert, au moyen d'au moins une vis d'extraction et d'au moins une vis transporteuse desdits déchets vers une bifurcation (3) à partir de laquelle les déchets sont envoyés vers un mélangeur (2) ou vers une trémie tampon (5) ;
c) le transfert desdits déchets depuis ladite trémie tampon (5) vers un granulateur (4), de préférence à tambour rotatif, comprenant une plaque (9) ayant un diamètre d'environ 3 mètres ; et au moins un raccordement au système d'aspiration de poudre situé dans la partie supérieure du carter ; ledit transfert prévoyant que : à partir de ladite bifurcation (3), les cendres volantes sont envoyées vers la trémie tampon (5) d'au moins 4 mètres cubes de capacité de stockage au moyen d'une vis horizontale (6) et d'une vis de chargement verticale (7), et que, depuis ladite trémie tampon (5), de préférence pourvue d'une vanne guillotine hydraulique pour réguler l'évacuation, le matériau est envoyé vers le granulateur (4) au moyen d'une vis d'extraction alimentant la plaque, pourvue d'un entraînement motorisé à vitesse variable pour la régulation du débit ;
d) l'introduction d'eau du réseau dans ladite plaque (9) au moyen d'une pluralité d'unités de pulvérisation à buses munies de filtres et d'électrovannes gérées en fonction de seuils d'humidité définis à partir d'un panneau tactile dédié ; la valeur d'humidité étant détectée à l'intérieur de la plaque (9) elle-même par des capteurs d'humidité pourvus de systèmes de nettoyage ;
e) la sortie des déchets ainsi traités à partir d'au moins une ouverture frontale et l'introduction de ceux-ci - par gravité - dans un bac de récupération de déchets traités.

8. Procédé de traitement de cendres volantes selon la revendication précédente, dans lequel lesdites étapes a), b), c), d), e) sont suivies d'une étape de maturation des granulés pendant des durées variables avant que lesdits granulés ne soient destinés à une utilisation finale.
